Europäisches Patentamt

European Patent Office

Office européen des brevets

(19)

(11) Veröffentlichungsnummer: **0 316 530 B1**

# (12) EUROPÄISCHE PATENTSCHRIFT

(45) Veröffentlichungstag der Patentschrift:
**03.04.91 Patentblatt 91/14**

(51) Int. Cl.$^5$: **F16B 37/00**

(21) Anmeldenummer: **88114495.0**

(22) Anmeldetag: **06.09.88**

(54) **Lagengesicherte Mutter.**

(30) Priorität: **13.11.87 DE 3738499**

(43) Veröffentlichungstag der Anmeldung:
**24.05.89 Patentblatt 89/21**

(45) Bekanntmachung des Hinweises auf die
Patenterteilung:
**03.04.91 Patentblatt 91/14**

(84) Benannte Vertragsstaaten:
**AT BE CH DE ES FR GB GR IT LI LU NL SE**

(56) Entgegenhaltungen:
**DE-U- 1 897 201**

(56) Entgegenhaltungen:
**FR-A- 1 183 518**
**FR-A- 2 072 945**
**GB-A- 1 579 385**
**US-A- 1 675 597**
**US-A- 2 255 650**
**US-A- 3 093 222**

(73) Patentinhaber: **Messerschmitt-Bölkow-Blohm
Gesellschaft mit beschränkter Haftung
Robert-Koch-Strasse
W-8012 Ottobrunn (DE)**

(72) Erfinder: **Rodousakis, Eleftherios
Unsoeldstrasse 12
W-8000 München 22 (DE)**

EP 0 316 530 B1

# Beschreibung

Die Erfindung betrifft eine Mutter gemäß dem Oberbegriff des Patentanspruchs 1.

Eine solche durch die GB-A-15 79 385 bekannte Mutter findet bei Schraubverbindungen von Werkstücken Verwendung, bei denen wegen zu geringer Wandungsdicke keine Gewindelöcher, sondern nur Durchgangslöcher möglich und diese zudem bei der Verschraubung der Werkstücke rückwärtig unzugänglich sind. Hierbei wird aber der aus der Dünnwandigkeit der Werkstücke resultierende Nachteil einer hohen Flächenpressung am Schraubenschaft in Kauf genommen. Mit diesem Mangel ist auch eine durch die DE-U-1 897 201 bekannte Schraubverbindung für zwei oder mehrere Elemente an ohne Muttergewinde versehenen Stellen behaftet, bei welcher eine in die Verbindungsbohrungen der Elemente eingesetzte elastische Kunststoffhülse von einer darin gedrehten Schraube infolge Stauchung sowohl gegen die Verbindungsbohrung als auch gegen den Schraubenschaft gepreßt wird.

Der Erfindung liegt daher die Aufgabe zugrunde, mit einer Mutter der eingangs genannten Art auch die Flächenpressung am Schraubenschaft zu senken.

Diese Aufgabe ist mit den kennzeichnenden Merkmalen des Patentanspruchs 1 gelöst in der Erkenntnis, daß die vorgeschlagene Verlängerung der Mutter zu einem Locheinsatz erst in der gekennzeichneten Form eines in den Durchgangslöchern mit radialem Abstand zum Schraubenschaft sitzenden, radial federnden Bauelementes zur Aufnahme von Querkräften aus Schubbelastungen der Werkstücke und damit zur Erhöhung der Scherfestigkeit der Schraubverbindung nutzbar ist. Dabei läßt sich mit der im Anspruch 2 gekennzeichneten Ausgestaltung der Erfindung das Risiko einer Beeinträchtigung des Kraftschlusses der Schraubverbindung ausschließen. Zudem ist die Lagensicherung der Mutter mit der im Anspruch 3 gekennzeichneten Ausgestaltung baulich einfach und zuverlässig realisierbar.

Nachfolgend wird die Erfindung anhand eines Ausführungsbeispiels näher erläutert. Hierzu zeigt die Zeichnung in

Fig. 1 in der Seitenansicht ein Lagergehäuse in Schraubverbindung mit einer Platte, und in größerem Maßstab von dieser Schraubverbindung in

Fig. 2 eine Draufsicht einer in einem Gehäuse angeordneten Mutter,

Fig. 3 einen Schnitt gemäß Schnittlinie III-III der Fig. 2,

Fig. 4 einen Schnitt gemäß Schnittlinie IV-IV der Fig. 2, um 90° gedreht,

Fig. 5 eine Draufsicht nur der Mutter gemäß Fig. 2,

Fig. 6 eine Seitenansicht der Mutter gemäß Fig. 2 bzw. 5,

Fig. 7 eine Draufsicht nur des Gehäuses gemäß Fig. 2,

Fig. 8 einen Schnitt gemäß Schnittlinie VIII-VIII der Fig. 7.

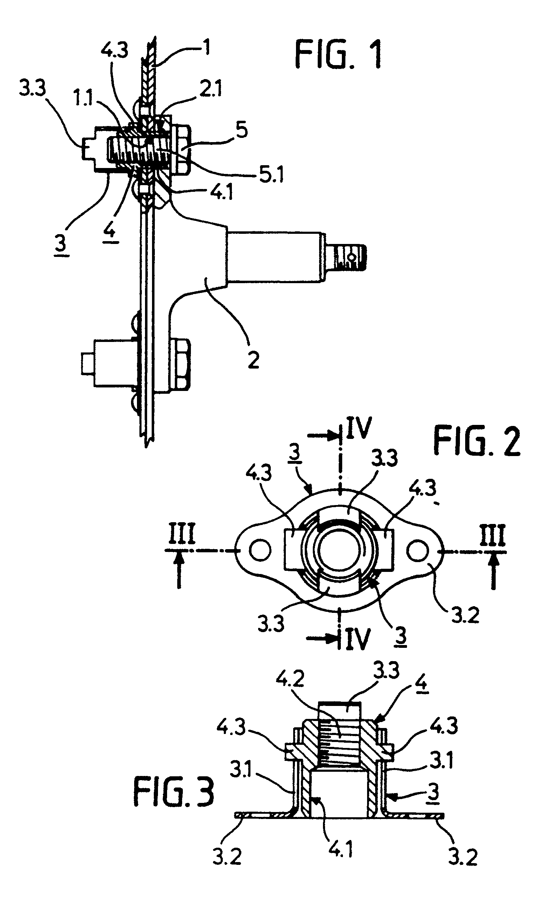

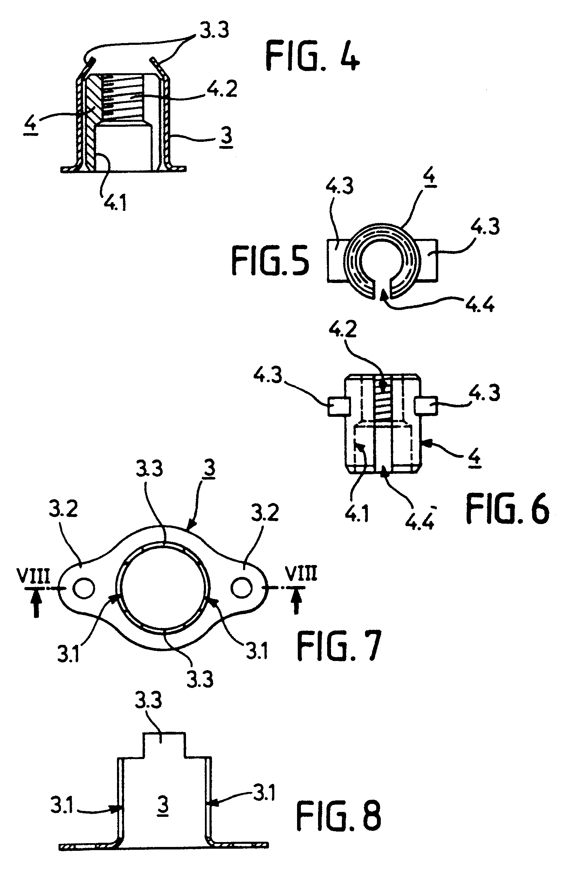

Gemäß Fig. 1 ist eine z.B. zweilagige Verbundplatte 1 zur Befestigung eines Lagergehäuses 2 mit dessen Durchgangslöchern 2.1 entsprechend gebohrten Durchgangslöchern 1.1 versehen, denen je eine an der Plattenrückseite durch ein angenietetes Gehäuse 3 lagengesicherte Mutter 4 für eine Durchsteckschraube 5 zugeordnet ist. Dabei ist die einzelne (in Fig. 5, 6 gesondert dargestellte) Mutter 4 so gestaltet, daß die mit (ihr gepaarte Durchsteckschraube 5 bzw. der Schraubenschaft 5.1 weitestgehend von Leibungsdruck freigehalten wird. Hierzu ist die Mutter 4 (in Form einer längsgeschlitzten Spannhülse in sämtliche Durchgangslöcher 1.1, 2.1 eingesetzt und, aus dem letzten Durchgangsloch 1.1 herausragend, mit einer den eingeschraubten Schraubenschaft 5.1 wenigstens annähernd über die Länge der Durchgangslöcher 1.1, 2.1 freisenkenden Aufbohrung 4.1 des Muttergewindes 4.2 versehen.

Gemaß Fig. 2 bis 4 werden das Gehäuse 3 und die Mutter 4 vor der Montage zu einer Baueinheit vereinigt, wobei jenes entsprechend der Hülsenform der Mutter 4 ein Rohrzylinder mit Längsschlitzen 3.1 ist, in welche radiale Führungslaschen 4.3 der Mutter 4 zu ihrer Sicherung gegen Verdrehen eingreifen. Da die Längsschlitze 3.1 gemäß Fig. 3 bzw. 7, 8 vorzugsweise an der mit Anschlußlaschen 3.2 versehenen Basis des Gehäuses 3 geschlossen sind, ist die Mutter 4 über das gegenüberliegende freie Gehäuseende einzuführen und dort gegen Herausschieben zu sichern. Letzteres geschieht durch Abwinkeln zweier Sperrlaschen 3.3 etwa in die in Fig. 4 dargestellte geneigte Lage.

Wie schließlich Fig. 5, 6 zeigen, erstreckt sich der Längsschlitz 4.4 der Mutter 4 über deren gesamte Länge, also auch in das Muttergewinde 4.2. In diesem Fall wird zweckmäßig die Mutter 4 in die Durchgangslöcher 1.1, 2.1 gespannt eingesetzt, so daß das Schraubengewinde entsprechend an das Muttergewinde 4.2 gepreßt wird. Andernfalls kann auch eine Beeinträchtigung des Kraftschlusses zwischen der Durchsteckschraube 5 und Mutter 4 durch eine Beschränkung ihres Längsschlitzes 4.4 auf die Aufbohrung 4.1 ausgeschlossen werden.

## Ansprüche

1. Lagengesicherte Mutter zur Verschraubung von mit fluchtenden Durchgangslöchern versehenen Werkstücken mittels einer Durchsteckschraube, wobei die Mutter am letzten Durchgangsloch in einem Gehäuse verdrehsicher gehalten wird, **dadurch gekennzeichnet**, daß die Mutter (4) die Form einer längsgeschlitzten Spannhülse aufweist, die sich über sämtliche Durchgangslöcher (1.1, 2.1) einer Verbindungsstelle erstreckt und in diese eingesetzt und, aus dem letzten Durchgangsloch (1.1) herausragend, mit einer den eingeschraubten Schraubenschaft (5.1) wenigstens annähernd über die Länge der Durchgangslöcher (1.1, 2.1) freisenkenden Aufbohrung (4.1) des Muttergewindes (4.2) versehen ist.

2. Mutter nach Anspruch 1, **dadurch gekennzeichnet,** daß der Längsschlitz (4.4) der Mutter (4) auf die Aufbohrung (4.1) beschränkt ist.

3. Mutter nach Anspruch 1, **dadurch gekennzeichnet,** daß das mit Anschlußlaschen (3.2) versehene Mutter-Gehäuse (3) ein Rohzylinder mit Längsschlitzen (3.1) ist, in kelche radiale Führungslaschen (4.3) der Mutter (4) eingrefen.

## Claims

1. Locking nut for bolting together two workpieces which are provided with flush through-holes, by means of a through bolt, in which respect the nut is held torsionally secure in a housing at the last passage hole, **characterized in that** the nut (4) has the shape of a longitudinally slotted clamping sleeve, which extends over all through-holes (1.1, 2.1) of a connecting area and is inserted into same, and protruding from the last through-hole (1.1) is provided with a bore (4.1) of the nut thread (4.2) which at least nearly freely sinks the screwed-on bolt shaft (5.1) over the length of the through-holes (1.1, 2.1).

2. Nut according to claim 1, **characterized in that** the longitudinal slot (4.4) of the nut (1) is limited to the bore (1.1).

3. Nut according to claim 1, **characterized in that** the nut housing, which is provided with a connecting flange (3.2), is a tubular cylinder with longitudinal slots (3.1), into which engage radial guide tongues (4.3) of the nut (4).

## Revendications

1. Ecrou à cage pour le vissage de pièces munies de trous débouchants alignés au moyen d'une vis traversante, l'écrou étant maintenu fixe en rotation dans une cage au niveau du dernier trou débouchant, caractérisé en ce que l'écrou (4) a la forme d'une douille de serrage fendue longitudinalement, qui s'étend sur l'ensemble des trous débouchants (1.1, 2.1) d'un point d'assemblage, et est engagé dans ceux-ci, et, faisant saillie hors du dernier trou débouchant (1.1), est muni d'un alésage (4.1) du filetage femelle (4.2) dégageant la tige (5.1) de la vis vissée, au moins approximativement sur la longueur des trous débouchants (1.1, 2.1).

2. Ecrou selon la revendication 1, caractérisé en ce que la fente longitudinale (4.4) de l'écrou (4) est limitée à l'alésage (4.1).

3. Ecrou selon la revendication 1, caractérisé en ce que la cage d'écrou (3), munie des pattes de fixation (3.2), est un tube cylindrique muni de fentes longitudinales (3.1), dans lesquelles s'engagent des languettes de guidage (4.3) radiales de l'écrou (4).

FIG. 1

FIG. 2

FIG.3

FIG. 4

3.3

4.2

4

3

4.1

FIG.5

4.3

4

4.3

4.4

4.2

4.3

4.3

FIG. 6

4.1

4.4

4

3.3

3

3.2

3.2

VIII

VIII

3.1

3.1

FIG.7

3.3

3.3

3.1

3

3.1

FIG.8